# EUROPEAN PATENT SPECIFICATION

(11) **EP 4 405 188 B1**
(45) Date of publication and mention of the grant of the patent: **04.06.2025**
(21) Application number: 22773323.5
(22) Date of filing: 20.09.2022
(51) Int. Cl.: B60J 1/00, B32B 17/00, B64C 1/14

(54) **AIRCRAFT WINDOW**
FLUGZEUGFENSTER
HUBLOT D'AÉRONEF

(30) Priority: 23.09.2021 IT 202100024506
(43) Date of publication of application: 31.07.2024
(73) Proprietor: Leonardo S.p.a., 00195 Roma (IT)
(72) Inventor: DI GIULIO, Massimiliano, 10146 TORINO (IT); GARGIULO, Gioacchino Ilario, 10146 TORINO (IT)
(74) Representative: Studio Torta S.p.A.
(86) International application number: PCT/IB2022/058862
(87) International publication number: WO 2023/047270

(56) References cited:
- EP-A2- 0 869 057
- DE-A1- 102010 031 483
- US-B1- 7 721 844

## Description

### Technical Field

The present invention relates to an aircraft window.

### Background of the Invention

The structure of an aircraft passenger window generically comprises: a first element of transparent material arranged, in use, facing the outside of the aircraft; a second element of transparent material arranged, in use, facing the cabin; and a gap that separates the first and second elements of transparent material which are arranged facing and spaced apart from one another.

The window not only separates the outside of the aircraft from the inside in a gas-tight manner, thus allowing the cabin to be pressurised, but is also configured to reduce the transmission of noise and of the vibrations produced by the propellers towards the cabin.

Patent US6132882A describes a transparent wall that can be used in an aircraft window comprising (a) a first rigid layer formed by a material selected from the group consisting of glass and plastic; (b) a second rigid layer formed by a material selected from the group consisting of glass and plastic; (c) a layer of anti-vibration material comprising a viscoelastic material placed between the first rigid layer and the second rigid layer; and (d) a first flexible plastic layer placed between the first rigid layer and the layer of anti-vibration material.

Patent EP1928732B1 describes an aircraft window comprising: a first inner layer of transparent material; a second outer layer of transparent material parallel to the first layer of transparent material and separated from it by a hollow gap; a rubber gasket securing the first and second layers at a depth within the rubber gasket; and a window frame, wherein the window frame wraps around the rubber gasket and encloses the rubber gasket around an entire perimeter of the rubber gasket.

Patent US7721844 B1 describes an aircraft window with damping devices of the type which can damp mechanical and/or acoustic vibrations in windows.

Aim of the present invention is to realise an aircraft window that achieves a high damping of the noise and vibrations transmitted from outside the aircraft towards the cabin.

### Summary of the Invention

The above-mentioned aim is achieved by the present invention in that it relates to an aircraft window of the type described in claim 1.

### Brief Description of the Drawings

For a better understanding of the present invention, a preferred embodiment is described below, by way of nonlimiting example, with reference to the accompanying figures in which:
Figure 1 shows in simplified cross-section an aircraft window realized according to the dictates of the present invention;
Figure 2 is a diagram showing the sound damping characteristics of the window of Figure 1;
Figures 3 and 4 show, in front view, a portion of the window of Figure 1.

### Detailed Description of the Invention

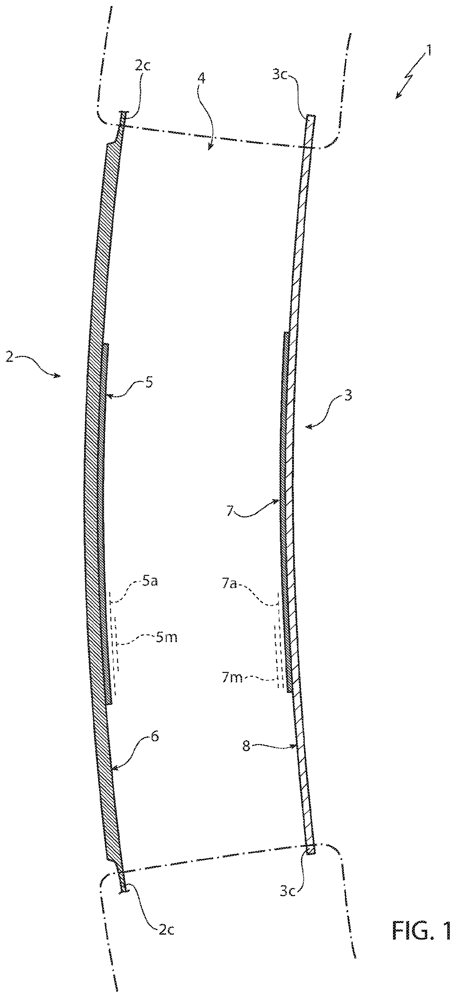

Figure 1 denotes, as a whole, 1 an aircraft passenger window configured to reduce the intensity of noise and of vibrations transmitted from outside the aircraft to inside the aircraft cabin comprising:
a first element of transparent material 2 arranged, in use, facing the outside of the aircraft;
a second element of transparent material 3 arranged, in use, facing the cabin;
a gap 4 that separates the first and second elements of transparent material 2, 3 which are arranged facing and spaced apart from one another.

Typically, the first and second elements of transparent material 2, 3 are formed by weakly curved sheets made of acrylic or glass and have a thickness of about 2.5 cm; these elements 2, 3 have perimeter edges 2c, 3c fixed to the fuselage (shown schematically with hatching) with techniques of known type, e.g. by means of a very strong adhesive glue and a series of rivets.

According to the present invention there is provided a first transparent sheet element 5 applied to a first face 6 of the first element of transparent material 2 facing the gap 4 and only a second transparent sheet element 7 applied to a second face 8 of the second element 3 facing the gap 4.

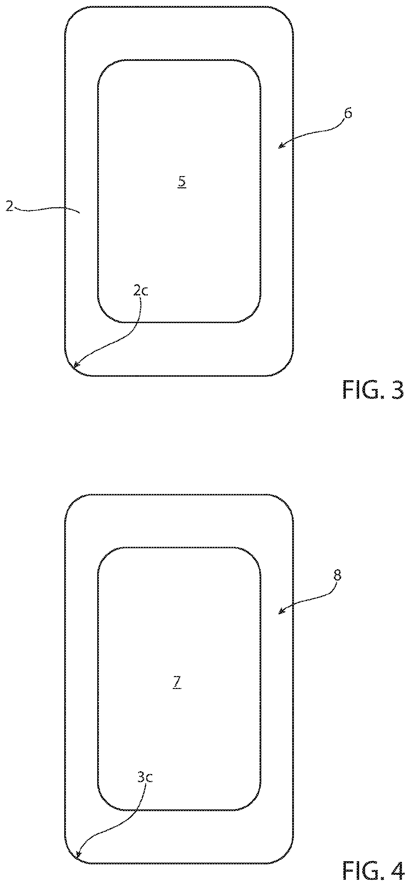

The first transparent sheet element 5 covers a central area of the first face 6 and is spaced from the edges of the first face 6 so that the perimeter edges 2c of the first transparent element 2 are free of said first sheet element 5 (see Figure 3).

The second transparent sheet element 7 covers a central area of the second face 8 and is spaced from the perimeter edges of the second face 8 so that the perimeter edges 3c of the second transparent element 3 are free of said second sheet element 7.

The first and second transparent sheet elements 5, 6 are made of transparent viscoelastic material.

As is well known, purely viscous materials respond to a tangential stress exhibiting a behaviour consistent with Newton's law, that is, by giving rise to a tangential strain within themselves equal to the product of the speed of deformation and viscosity; if they are subjected to a normal stress, they do not oppose in any way.

The elastic materials respond to a normal stress exhibiting a behaviour consistent with Hooke's law, that is, by giving rise within them a normal strain equal to the product of Young's modulus and deformation (expressed in terms of percentage elongation) and returning to their original state when these stresses cease; if instead they are subjected to a tangential stress, they do not oppose in any way.

Viscoelastic materials oppose both tangential stresses and normal stresses, thus generating both tangential strains and normal strains within them.

Examples of viscoelastic materials are some amorphous polymers, some semi-crystalline polymers and some biopolymers.

Other examples are the thermosetting polymers, which at an appropriate temperature behave like a viscous fluid, and the polymers in a rubbery state such as the elastomer.

In particular, the viscoelastic material may belong to the family of acrylic polymer materials and is provided with a silicone coating film.

Preferably, the first and second transparent elements may comprise a first plurality n of transparent sheet layers 5, 5a, ... 5n of viscoelastic material superimposed over one another (indicated in the drawing with hatching) so as to obtain a layered structure applied to the first face 6 of the first element 2 facing the gap 4 and a second plurality m of transparent sheet layer 7, 7a, ... 7m of viscoelastic material superimposed over one another (indicated in the drawing with hatching) so as to obtain a layered structure applied to the second face 8 of the second element 3 facing the gap 4.

Preferably, the transparent sheet layers 5, 5a, ... 5n belonging to the first layered structure have different thicknesses from one another.

The thicknesses vary from one tenth of a millimetre to one millimetre and the elements may preferably have the same dimension as the one underneath or smaller dimensions to facilitate the passage of light through the window. The application is carried out through the adhesive property of the transparent elements of viscoelastic material 5, 5a, ... 5n.

Furthermore, preferably the transparent sheet layers 7, 7a, ... 7m belonging to the second layered structure have different thicknesses from one another.

The thicknesses vary from one tenth of a millimetre to one millimetre and the elements may preferably have the same dimension as the one underneath or smaller dimensions to facilitate the passage of light through the window. The application is carried out through the adhesive property of the transparent elements of viscoelastic material 7, 7a, ... 7m.

The window shown above solves the problem of vibration and noise transmission by providing one or more layers of varying thickness of viscoelastic material, each of which is applied internally to the transparent elements of which the pre-existing window configuration is composed.

The two viscoelastic elements 5 and 7 dampen both the airborne vibrations (between the first element of transparent material 2 and the second element of transparent material 3) and the vibrations transmitted structurally (from the structure of the aircraft directly to the second element of transparent material 3) obtaining a high overall damping performance.

This leads to acoustic performances that, at least up to 800 Hz, are advantageous compared to the solutions proposed by the prior art.

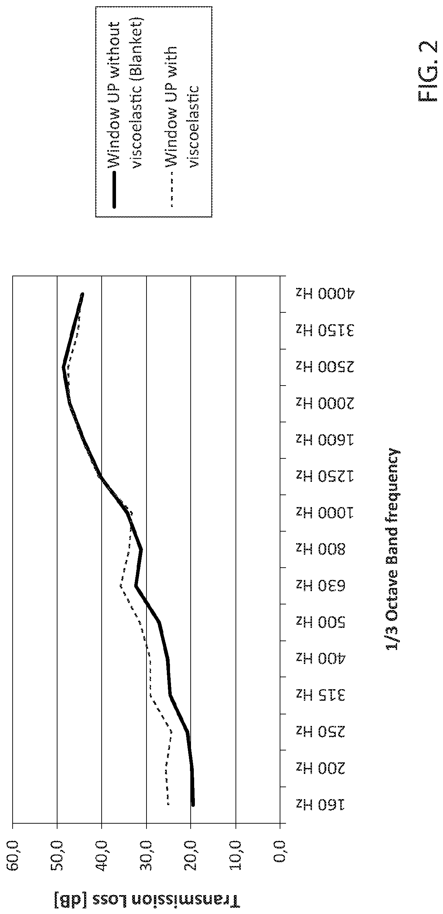

In Figure 2 in fact it can be seen that the loss of sound transmission (also called Insulating Power - Transmission Loss), represented by a measurement in dB of the ratio between the incident sound power and the power transmitted through a dividing element hit by an acoustic wavefront, is maintained between 20 and about 30 dB in the range 160Hz and 800 Hz which corresponds to both the multiple rotation frequencies of many turboprop engines, and to a portion of the frequencies of the noise generated by the turbulent aerodynamic flows on the fuselage. The line indicated with a non-continuous stroke indicates the performance of a window made according to the present invention **(Window UP with viscoelastic)** while the curve indicated with a solid stroke indicates the performance of a window made according to the known art **(Window UP without viscoelastic)** .

### Numbers

- 1: aircraft window
- 2: first element of transparent material
- 3: second element of transparent material
- 4: gap
- 5: first transparent sheet element
- 6: face
- 7: second transparent sheet element
- 8: face

## Claims

1. An aircraft window configured to reduce the intensity of vibrations transmitted from outside the aircraft to inside the aircraft cabin comprising:
a first element of transparent material (2) arranged, in use, facing the outside of the aircraft;
a second element of transparent material (3) arranged, in use, facing the cabin;
a gap (4) that separates the first and second elements of transparent material (2,3) which are arranged facing and spaced apart from one another;
at least a first transparent sheet element (5) applied to a first face of the first element (2) facing the gap;
at least one second transparent sheet element (7) applied to a second face of the second element (3) facing the gap;
the first and second transparent sheet elements (5,7) being made of transparent viscoelastic material, **characterised in that** it comprises:
the first transparent sheet element (5) covers a central area of the first face (6) and is spaced from the edges of the first face (6) so that the perimeter edges (2c) of the first transparent sheet element (2) are free of said first sheet element (5);
the second transparent sheet element (7) covers a central area of the second face (8) and is spaced from the perimeter edges of the second face (8) so that the perimeter edges (3c) of the second transparent sheet element (3) are free of said second sheet element (7).

2. The window according to claim 1, wherein a first plurality of transparent sheet elements (5, 5a, ... 5n) of viscoelastic material are provided superimposed over one another so as to obtain a layered structure applied to the first face (6) of the first element facing the gap, and a second plurality of transparent sheet elements of transparent viscoelastic material superimposed over one another so as to obtain a layered structure applied to a first face of the second element facing the gap.

3. The window according to claim 2, wherein the transparent sheet elements belonging to the first layered structure have different thicknesses from one another.

4. The window according to claim 2 or 3, wherein the transparent sheet elements belonging to the second layered structure have different thicknesses from one another.

5. The window according to any one of the preceding claims, wherein the viscoelastic material belongs to the family of acrylic polymer materials and is provided with a silicone coating film.

## Patentansprüche

1. Luftfahrzeugfenster, das konfiguriert ist, die Intensität von Schwingungen, die von außerhalb des Luftfahrzeugs in den Innenraum der Luftfahrzeugkabine übertragen werden, zu verringern, das Folgendes umfasst:
ein erstes Element (2) aus durchsichtigem Material, das im Gebrauch nach außerhalb des Luftfahrzeugs orientiert ist,
ein zweites Element (3) aus durchsichtigem Material, das im Gebrauch zur Kabine orientiert angeordnet ist,
einen Zwischenraum (4), der das erste und das zweite Element (2, 3) aus durchsichtigem Material, die einander zugewandt und voneinander beabstandet angeordnet sind, trennt;
mindestens ein erstes durchsichtiges Folienelement (5), das auf eine erste Fläche des ersten Elements (2), die dem Zwischenraum zugewandt ist, aufgebracht ist,
mindestens ein zweites durchsichtiges Folienelement (7), das auf eine zweite Fläche des zweiten Elements (3), die dem Zwischenraum zugewandt ist, aufgebracht ist,
wobei das erste und das zweite durchsichtige Folienelement (5, 7) aus einem durchsichtigen, viskoelastischen Material hergestellt sind,
**dadurch gekennzeichnet, dass**
das erste durchsichtige Folienelement (5) einen Mittelbereich der ersten Fläche (6) abdeckt und von den Kanten der ersten Fläche (6) beabstandet ist, derart, dass die Umfangskanten (2c) des ersten durchsichtigen Folienelements (2) vom ersten Folienelement (5) freiliegen;
das zweite durchsichtige Folienelement (7) einen Mittelbereich der zweiten Fläche (8) abdeckt und von den Umfangskanten der zweiten Fläche (8) beabstandet ist, derart, dass die Umfangskanten (3c) des zweiten durchsichtigen Folienelements (3) vom zweiten Folienelement (7) freiliegen.

2. Fenster nach Anspruch 1, wobei eine erste Mehrzahl durchsichtiger Folienelemente (5, 5a, ... 5n) aus viskoelastischem Material einander überlagert vorgesehen sind, um eine geschichtete Struktur zu erhalten, die auf die erste Fläche (6) des ersten Elements, die dem Zwischenraum zugewandt ist, aufgebracht ist, und eine zweite Mehrzahl durchsichtiger Folienelemente aus durchsichtigem, viskoelastischem Material einander überlagert sind, um eine geschichtete Struktur zu erhalten, die auf eine erste Fläche des zweiten Elements, die dem Zwischenraum zugewandt ist, aufgebracht ist.

3. Fenster nach Anspruch 2, wobei die durchsichtigen Folienelemente, die zur ersten geschichteten Struktur gehören, voneinander verschiedene Dicken aufweisen.

4. Fenster nach Anspruch 2 oder 3, wobei die durchsichtigen Folienelemente, die zur zweiten geschichteten Struktur gehören, voneinander verschiedene Dicken aufweisen.

5. Fenster nach einem der vorhergehenden Ansprüche, wobei das viskoelastische Material zur Familie von Acrylpolymermaterialien gehört und mit einem Silikonbeschichtungsfilm versehen ist.

## Revendications

1. Hublot d'aéronef configuré pour réduire l'intensité de vibrations transmises de l'extérieur de l'aéronef vers l'intérieur de la cabine d'aéronef comprenant :
un premier élément de matériau transparent (2) agencé, en cours d'utilisation, orienté vers l'extérieur de l'aéronef ;
un second élément de matériau transparent (3) agencé, en cours d'utilisation, orienté vers la cabine ;
un espace (4) qui sépare les premier et second éléments de matériau transparent (2,3) qui sont agencés en vis-à-vis et espacés l'un de l'autre ;
au moins un premier élément de feuille transparente (5) appliqué sur une première face du premier élément (2) orientée vers l'espace ;
au moins un second élément de feuille transparente (7) appliqué sur une second face du second élément (3) orientée vers l'espace ;
les premier et second éléments de feuille transparente (5,7) étant en matériau viscoélastique transparent, **caractérisé en ce qu'**il comprend :
le premier élément de feuille transparente (5) recouvre une zone centrale de la première face (6) et est espacé des bords de la première face (6) de sorte que les bords périphériques (2c) du premier élément de feuille transparente (2) soient dégagés dudit premier élément de feuille (5) ;
le second élément de feuille transparente (7) recouvre une zone centrale de la second face (8) et est espacé des bords périphériques de la second face (8) de sorte que les bords périphériques (3c) du second élément de feuille transparente (3) soient dégagés dudit second élément de feuille (7).

2. Hublot selon la revendication 1, dans lequel une première pluralité d'éléments de feuille transparente (5, 5a, **...** 5n) de matériau viscoélastique sont prévus superposés les uns sur les autres de manière à obtenir une structure stratifiée appliquée sur la première face (6) du premier élément orientée vers l'espace, et une second pluralité d'éléments de feuille transparente de matériau viscoélastique transparent superposés les uns sur les autres de manière à obtenir une structure stratifiée appliquée sur une première face du second élément orientée vers l'espace.

3. Hublot selon la revendication 2, dans lequel les éléments de feuille transparente appartenant à la première structure stratifiée présentent des épaisseurs différentes les unes des autres.

4. Hublot selon la revendication 2 ou 3, dans lequel les éléments de feuille transparente appartenant à la second structure stratifiée présentent des épaisseurs différentes les unes des autres.

5. Hublot selon l'une quelconque des revendications précédentes, dans lequel le matériau viscoélastique appartient à la famille des matériaux polymères acryliques et est pourvu d'un film de revêtement en silicone.
